# EUROPEAN PATENT SPECIFICATION

(11) **EP 0 902 080 B1**
(45) Date of publication and mention of the grant of the patent: **27.02.2002**
(21) Application number: 98107559.1
(22) Date of filing: 24.04.1998
(51) Int. Cl.: C10L 5/40, F17C 11/00

(54) **Use of compositions as solid fuels and method for their preparation**
Verwendung von Zusammensetzungen als feste Brennstoffe und Verfahren zu ihrer Herstellung
Utilisation de compositions comme combustibles solides et leur procédé de fabrication

(30) Priority: 07.05.1997 JP 13439997
(43) Date of publication of application: 17.03.1999
(73) Proprietor: TOKYO GAS CO., LTD., Minato-ku, Tokyo 105-0022 (JP)
(72) Inventor: Okui, Toshiharu, Tama-shi, Tokyo 206 (JP); Maeda, Yuriko, Setagaya-ku, Tokyo 154 (JP); Ishikura, Takefumi, Meguro-ku, Tokyo 153 (JP); Neda, Tokudai, Meguro-ku, Tokyo 153 (JP)
(74) Representative: Goddar, Heinz J., Dr.

(56) References cited:
- EP-A- 0 649 815
- EP-A- 0 787 941
- WO-A-95/13857
- FR-A- 2 219 919
- GB-A- 1 303 378
- US-A- 5 039 651

## Description

This invention relates to the use of a material as a solid fuel and a method for making a solid fuel.

In recent years, attention has been drawn, as an energy source, to methane, natural gas mainly composed of methane, or lower hydrocarbons such as ethane, propane, butane and the like. However, these are gaseous in nature, so that close attention should be paid thereto with respect to their handling. Gas in a gaseous state has a very large volume and a low specific gravity. Consequently, means of increasing a density of gas has been adopted in order to improve storage and transportation efficiencies, for example, in storing and transporting gas by compression under high pressure or by liquefaction.

On the other hand, various types of solid fuels have been hitherto made and commercially sold including, aside from plant fuels such as of charcoal, mineral fuels and animal fuels such as of coal, petroleum and the like, and are widely utilized not only for the purposes of heating and cooking, but also for preparing meals in camping. However, solid fuel is disadvantageous in that the fuel is not ordinarily inflammable, so that it takes a long time before ignition, coupled with another disadvantage that its heating power is low with the duration time being short. Further, solid fuel is apt to give out smoke with the attendant problem on hygiene.

The document EP 0787941 A2, which is effective under articles 54 (3) and 54 (4) EPC for the contracting states DE, FR, GB and IT, discloses a method of storing and transporting gas, wherein a large amount of gas can be stored and transported by bringing a compound serving as host and a gas to be stored into contact with a porous material under mild temperature and pressure conditions of an ordinary temperature or a temperature close thereto and a low pressure, an ordinary pressure or a pressure close to the normal pressure in a very short time, thereby enabling the gas in an amount, for example, equivalent to not less than 180 times (converted to the standard state basis) as much as an unit volume of the porous material to be stored or transported.

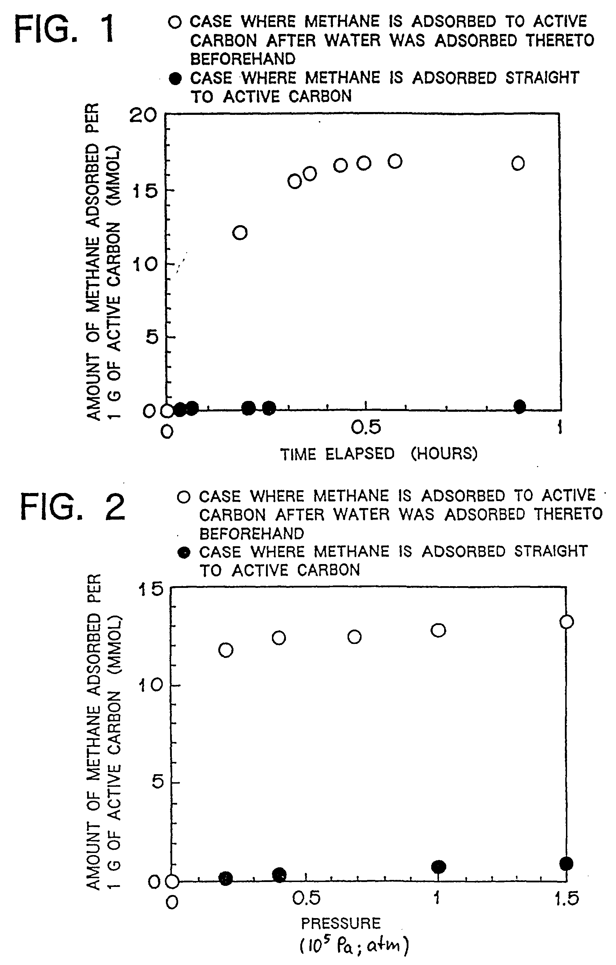

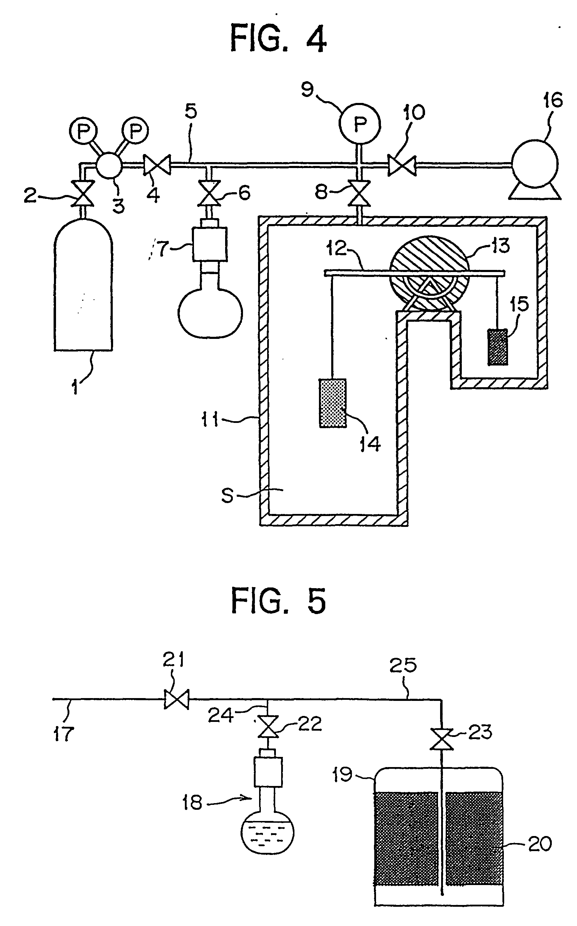

Fig. 1 is a graph showing an example evidencing the characteristics of the porous material. An apparatus used is one shown in Fig. 4 described hereinafter. In this instance, after 0.0083 g of water was adsorbed to 0.0320 g (0.0461 cc) of pitch-based active carbon having a specific surface area of 1765 m²/g, an average pore size of 1.13 nm (nanometers), a pore capacity of 0.971 cc/g, an intrinsic specific gravity of 2.13 g/cc, and an apparent specific gravity of 0.694 g/cc, methane gas under 0.2 atm at 30°C was fed thereto. For comparison, the above procedure was repeated except that methane gas under the same conditions as mentioned above was fed thereto but without adsorption of water. In Fig. 1, variation in the weight of the methane gas adsorbed per 1 g of the active carbon is shown in relation to the variation in time. In Fig. 1, the variation in the weight when water was adsorbed to the active carbon prior to the methane gas being adsorbed thereto is plotted with the mark "○" (blank circles), whereas the variation obtained when methane gas was adsorbed straight to the active carbon is plotted with the mark "●" (solid circles).

As shown in Fig. 1, where water was adsorbed to the active carbon first, and then the methane gas was fed thereto, the active carbon started to adsorb the methane gas henceforth at a rapid rate with an amount of the methane gas adsorbed after the elapse of 0.2 hours reaching more than 15 mmols per 1 g of the active carbon and the same after the elapse of 0.5 hours reaching around 17 mmols per 1 g of the active carbon, which was maintained thereafter. Considering the fact that the methane gas fed at this point was pressurized at 2·10⁴ Pa (0.2 atm) (at 30°C), it can be seen that a rate, at which the methane gas is adsorbed, and an amount of adsorbed methane are superior to those attained by use of conventional adsorbents.

On the other hand, when the methane gas was fed without water being adsorbed to the active carbon beforehand as in the conventional methods, only a minimal amount of the methane gas was adsorbed without showing any change in the amount of the methane gas adsorbed after the elapse of time under the same atmosphere as described above. In this regard, according to the method referred to in JP-A- 49-104213, for example, silica gel, molecular sieves, active carbon, and the like are placed in a pressure tank, and methane gas is stored by applying pressure at about 6.9·10⁶ Pa (68 atm, equivalent to 1000 psia). In application of this technique, such high-pressure operation is indispensable even using similar adsorbents described above.

Table 1 shows the results of comparison of the amounts of methane adsorbed per 1 g of the active carbon as shown in Fig. 1. As shown in Table 1, an amount of methane adsorbed was only 0.18 mmols after the elapse of 0.2 hours in the case where methane was adsorbed straight to the active carbon, whereas it was 12.08 mmols in the case where water was adsorbed to the active carbon beforehand, 67 times as much as the former case. After the elapse of 0.9 hours, an amount of methane adsorbed straight to the active carbon was 0.18 mmols, whereas it was 16.46 mmols in the case of water coexisting with methane, 91 times as much as the former case.

**[Table 1]**

| Time Elapsed (Hours) | Amount of methane adsorbed per 1 g of active carbon (mmols) | | Ratio (A/B) |
|---|---|---|---|
| | Methane adsorbed to the active carbon after water was adsorbed (A) | Methane adsorbed straight to the active carbon (B) | |
| 0.2 | 12.08 | 0.18 | 67.1 |
| 0.9 | 16.46 | 0.18 | 91.4 |

A volume of methane adsorbed to 1 cc in an apparent volume of the active carbon in the presence of water is calculated as 183 cc on the standard state basis under 1 atm at 0°C. This result shows that methane was stored in a volume exactly 183 times, on the standard state basis, as large as an unit volume of the active carbon under a pressure as low as only 2·10⁴ Pa (0.2 atm). Then (after the elapse of 0.9 hours), an amount of methane adsorbed was found slightly reducing, and finally reached 11.77 mmols, at which a state of equilibrium was achieved without any change thereafter.

The document WO95/13875 discloses a process for the simultaneous sorption of water and organic compounds from gases chosen from the group, which includes natural gas and process gas. The gas to be treated is brought into contact with a sorbant, which contains particles of active carbon in an oxide carrier.

GB 1303378 proposes a fuel gas composition suitable for heat treatment requiring high temperatures, which comprises a gases mixture of 65 to 90 volume percent of acetylene gas and 35 to 10 volume percent of liquefied petroleum gas, the gaseous mixture being dissolved in a high pressure container packed with a porous material impregnated with a solvent consisting of acetone, toluene, xylene or a mixture thereof.

The problem remains to find a porous material in which a large amount of fuel gas is stored for application as solid fuel.

It has turned out that a material where a large amount of a lower hydrocarbon fuel is stored in porous material used along with water, in alcohol and in organic acid or a quinone serving as a host at or close to ordinary temperature under a reduced pressure or a low pressure ranging from the atmospheric to 1.1 · 10⁶ Pa (equivalent to 10.68 atm or 10 kg/cm² by gauged pressure) is suitable.

According to another embodiment of the invention, there is also provided a method for making a gas fuel-stored solid fuel, characterized by bringing a fuel gas containing a low hydrocarbon into contact with a porous material after adsorbing a quinone serving as host to the fuel gas within the porous material or simultaneously with the substance being adsorbed to the porous material.

Fig. 1 is a graph showing variation with time in the amount of methane adsorbed to 1 g of active carbon in the presence of water in comparison with the variation when methane was brought straight in contact with the active carbon without presence of water (under 0.2 atm at 30°C);

Fig. 2 is a graph showing variation under different pressures in the amount of methane adsorbed to 1 g of active carbon, comparing the case conducted in the presence of water with the case of methane being brought straight in contact with the active carbon (under 0 to 1.5·10⁵ Pa (1.5 atm) at 30°C);

Fig. 3 is a graph showing variation under different pressures in the amount of methane adsorbed to 1 g of active carbon, comparing the case conducted in the presence of water with the case of methane being brought straight in contact with the active carbon (under 0 to 2·10⁶ Pa (20 atm) at 30°C);

Fig. 4 is a schematic view showing the structure of an apparatus used in the examples; and

Fig. 5 is a view showing an apparatus of making a gas fuel-stored solid fuel embodying the invention.

The porous materials used in the present invention are not critical provided that they are porous materials having fine pores. Preferably, porous materials having a specific surface area of 100 m²/g or above are used. So far as the porous material does not react with or dissolve in water, alcohols or other compounds serving as host having a similar function therewith (that is, they do not substantially give any adverse influences such as of dissolution, reaction and the like), any porous material may be used irrespective of the type, manner of preparation and shape thereof. Further, the porous materials do not need uniformity with respect to the shape of the fine pores and the distribution of the pore size thereof.

Any porous materials having the characteristics described above may be used in the practice of the invention. Examples of the porous materials include active carbon (including porous carbon), ceramics and the like. Among them, active carbon is particularly suitable for this purpose. The active carbon per se serves as fuel, and is inexpensive and readily available, thus being quite advantageous in this regard. With the ceramics, after use as fuel, ash (solid matter) is left, and they are used only in the case of permitting ash to be left.

The substances serving as host are water, alcohols such as methyl alcohol, ethyl alcohol and the like, organic acids such as formic acid, acetic acid and the like, quinones such as benzoquinone, and the like. Of these, water or alcohols are preferably used.

To obtain the material used as a solid fuel, the compound serving as host and a fuel gas to be stored are brought into contact with a porous material, such as active carbon or a ceramic material, under mild conditions of ordinary temperature and ordinary pressure or close to this temperature and pressure. Through the contact, a large volume of the fuel gas equivalent, for example, to not less than 180 times (converted to the standard state basis) an unit volume of the porous material can be stored in a very short time. The fuel gases to be stored in the invention may not be limited provided that they are lower hydrocarbons used as gas fuel, and include, for example, lower hydrocarbons such as methane, ethane, propane, butane and the like, or mixtures of two or more of these gases. Besides, natural gas or city gas may also be used.

These fuel gases can be adsorbed to and stored in the porous material not only under a low pressure ranging from normal pressures to 1.1·10⁶ Pa (10.68 atm ; (equivalent to 10 kg/cm² by gauge pressure) or below, but also under a reduced pressure, for example, of 2·10⁵ Pa (0.2 atm). Further, under a pressure exceeding 1.1·10⁶ Pa (10.68 atm ; (10 kg/cm² by gauge pressure), a large amount of fuel gas can be stored correspondingly to the pressure used.

In the manufacture of the solid fuel of the invention, any specific type of separate cooling device is not necessary, thus being very effective in practice. For instance, where active carbon is used as the porous material in the solid fuel of the invention, not only the active carbon per se is a fuel, but also the fuel gas stored therein is just fuel. The active carbon is able to store a large amount of the fuel gas as much as not less than 180 times the volume thereof, and thus, the solid fuel is small in volume (compact in size) with strong heating powder being obtained.

Although the porous material, e.g. active carbon, can store a large amount of fuel gas as much as not less than 180 times the volume of the porous material, the fuel gas may be stored to 100% in the maximal storing capacity of the porous material. Further, it may be possible that the gas is stored in an amount enough for the solid fuel in order to provide a solid fuel having a different degree of heating power (calorific value). More particularly, the amount of fuel gas stored in the porous material can be arbitrarily controlled depending on the required heating power (calorific value).

With active carbon, for example, it is readily available in powder form, granular form, fibrous form and various other forms having various pore sizes and large specific surface areas. The pore size distribution and the specific surface area can be readily confirmed by measuring an amount of nitrogen adsorbed at the liquid nitrogen temperature and an adsorption isotherm. As the active carbon material has a very large specific surface area, a very large number of molecules (the molecules of fuel gas) can be adsorbed on the surfaces thereof. The molecules adsorbed on the surfaces are allowed to stand in a state where most of the molecules are exposed to the surface at the inside of the fine pores by control of the adsorption.

These materials have a sufficiently small pore size, for example, of several nanometers to several tens of nanometers, and as a result, the molecules adsorbed to the surfaces of the fine pores behave as if they were under high pressure conditions. Such behavior represents a phenomenon known as a quasi-high pressure effect. Phase transition, reaction, and the like which occur normally only under high pressure can occasionally happen under moderate conditions of lower pressure and lower temperature by use of a porous material having fine pores. The storage effect of the invention is presumably attributable to such a phenomenon as described above although the cause thereof is not known in detail.

As for the substance serving as host in the practice of the invention, a substance is used that can form a certain structure through hydrogen bond when several molecules thereof cluster. As described hereinbefore, aside from water and alcohols, organic acids, and quinones are mentioned. Among them, water and alcohols are preferably used. Although hydrogen sulfide and urea may also be used as host, there arises the problem that when they are combusted as fuel, sulfur dioxide or nitrogen oxide (NOx) are emitted. Accordingly, hydrogen sulfide or urea should be used after solving this problem.

According to hitherto accepted technical knowledge, these host substances coexist with gas molecules (referred to as "guest molecules") each having dimensions in a certain range, clathrate compounds are formed, causing gas molecules to be crystallized in a very close proximity to each other and stabilized. This is a phenomenon wherein the host substance coexisting with gas molecules serving as guest under certain pressure and temperature conditions forms jointly with the gas molecules, through hydrogen bond, specific cubic structures, for example, cage-like structures in which the guest molecules are surrounded by the host molecules, and such clathrates are normally formed under conditions of low temperature and high pressure.

On the contrary, the invention enables a large amount of fuel gas to be stored rapidly without need of high pressure through combination of a high absorbing capacity of the porous material having fine pores, the above-mentioned quasi-high pressure effect inside the fine pores, and the characteristic of the gas capable of forming clathrates. The gas storing capacity obtained far exceeds a ratio of the number of guest molecules to that of host molecules attained by any hitherto known clathrates. Such a phenomenon as described above cannot be explained by any known theory pertaining to the formation of clathrates alone. It appears that some synergistic effects due to the combination of a porous material having fine pores and clathrates, i.e. an effective and excellent gas storage action according to some new and beneficial theory, has occurred.

The embodiments of storing fuel gas in the porous material of the solid fuel of the invention include, for example: (1) the porous material is placed in a vessel first, and then a substance serving as host is fed into the vessel wherein it is adsorbed to the porous material, followed by further feed of fuel gas thereinto; (2) the porous material to which the host substance has already been adsorbed is placed in a vessel, and then fuel gas is fed into the vessel; (3) the porous material is placed in a vessel, into which the host substance and fuel gas are introduced at the same time; and (4) the procedures mentioned above under (1) to (3) are used in combination.

In the embodiments under (1) to (4), the host substance may be fed and adsorbed to the porous material by spraying or impregnation. Preferably, it is fed to and introduced into as vapor. In the embodiment under (3), the vapor and a lower hydrocarbon gas are introduced at the same time. In this case, care should be paid in order not to cause any inconvenience such as of condensation of the vapor by controlling the flow rate or temperature of the lower hydrocarbon gas or by appropriately designing an inner diameter of a pipe thereof.

In any embodiments, the adsorption and storage proceeds under low pressure without need of any high pressure vessel. Of course, a pressure vessel may be used. In the manufacture of the solid fuel of the invention, the fuel gas can be adsorbed to and stored to the porous material under a pressure exceeding, for example 1.1·10⁶ Pa [10.68 atm (equivalent to 10 kg/cm² by gauge pressure)]. In the case, a pressure container which is resistance to such a high pressure is employed.

The thus obtained solid fuel is obtained in powder form, granular form, or fibrous form, and may be used as solid fuel as it is. Alternatively, the solid fuel may be in various forms such as of dust, oval briquet, briquet and the like. In the case, pitch, funorin, waste liquor of pulp or other binders are added to and mixed with the solid fuel and shaped in a given form. The shape may include, aside from the rectangular form, oval form and the like, conventionally employed forms of oval briquet, perforated briquet, charcoal ball and the like. If necessary, charcoal, coal, smokeless coal, cokes and the like in powder form may be mixed prior to the shaping.

The solid fuel stored a large amount of fuel gas therein, and has merits of both conventional solid fuel and gas fuel at the time of combustion as fuel. More particularly, (1) the solid fuel is more likely to catch fire than conventional solid fuel; (2) when using active carbon as the porous material, the active carbon per se serves as fuel without leaving any ash, thus being easy in clearance; and (3) gas fuel has disadvantageous in (1) that it is ordinarily pressurized and is liable to leak, (2) that it has a danger of explosion when leaked in air, and (3) that it requires materials storage and transportation, such as of tanks and pipes, nevertheless, the solid fuel of the invention has no such problems.

### EXAMPLES

The invention is described in more detail by way of examples, which should not be construed as limiting the invention thereto. First, an apparatus of manufacturing a solid fuel used in the examples, and then preparatory examples using the apparatus are described.

Fig. 4 is a view showing the arrangement of an apparatus used in the examples. In Fig. 4, reference numeral 1 indicates a high pressure cylinder for lower hydrocarbon gas, reference numerals 2. 4, 6, 8 and 10 are, respectively, a valve, 3 a regulator, 5 a gas pipe, 7 a water vapor generator, and 9 a pressure gauge. Then, reference numeral 11 is a pressure vessel, 12 a beam balance, 13 a mechanism for detecting downward displacement of one of the beams of the beam balance and correcting such downward displacement by electromagnetic force, 14 a porous material to which a low hydrocarbon gas adsorbs to from a hydrate product, 15 a reference weight (to which gas does not adsorb), and 16 is a vacuum pump.

When operating the above apparatus, firstly air was evacuated from the pressure vessel 11 and the gas pipe 5 by use of the vacuum pump 16, and then water was caused to adsorb to the porous material 14. The adsorption of water was conducted in the following manner. Initially, water vapor generated from the water vapor generator 7 was fed into the pressure vessel 11 via the gas pipe 5 by opening the valve 6, thereby forming a saturated water vapor atmosphere in the vessel 11 to cause water to be adsorbed sufficiently to the porous material 14.

Thereafter, a predetermined water vapor atmosphere was formed by adequately reducing pressure further with the vacuum pump 16, and removing excess water adsorbed. Then, the valves 4 and 8 were closed to sufficiently decompress the inside of the gas pipe 5, and moisture inside the gas pipe 5 was completely removed. Thereafter, the lower hydrocarbon fuel gas was brought into contact with the porous material 14 prepare as above. While the lower hydrocarbon gas in the high pressure cylinder 1 was strictly controlled by means of the regulator 3, it was fed into the system to form a gas atmosphere S with a predetermined pressure inside the pressure vessel 11.

Accurate measurement of amounts of water and the lower hydrocarbon fuel gas that was adsorbed to the porous material 14 was made according to a method wherein an amount of water and the lower hydrocarbon gas, respectively, adsorbed to the porous material 14 is calculated from a quantity of electricity consumed to keep the beam of the beam balance 12 horizontal by the agency of electromagnetic force against a tendency of one end of the beam, on the side of the porous material 14, being displaced downward due to an increase in the weight of the water and the lower hydrocarbon gas adsorbed to the porous material 14. A temperature of the atmosphere was kept constant by housing the apparatus in whole in a thermostat. In Fig. 4, the thermostat is not shown.

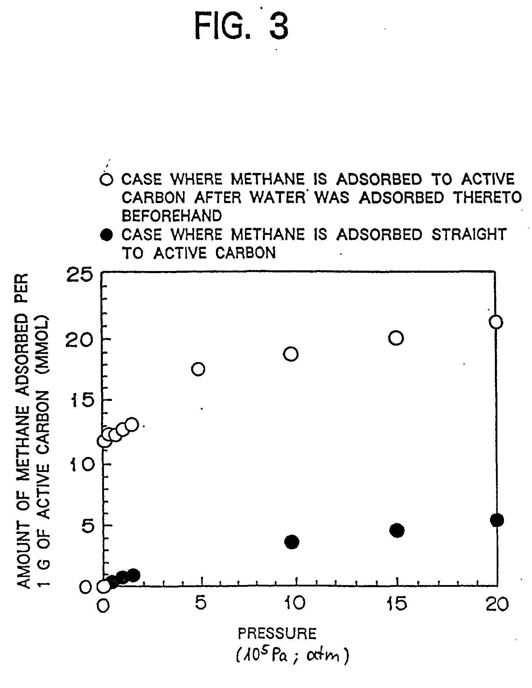

Figs. 2 and 3 show the characteristic of the gas fuel-stored solid fuel prepared using such an apparatus as set out above. More particularly, 0.0083 g of water was adsorbed to 0.0320 g (0.0461 cc) of such active carbon as used to obtain the results of Fig. 1 and Table 1, after which methane gas was pressurized at 0 to 2·10⁶ Pa (20 atm), respectively, at 30°C, and amounts of methane gas adsorbed after a state of equilibrium was reached at the respective pressures were measured. Fig. 2 shows variation in the amount under a pressure in the range of from 0 to 1.5·10⁵ Pa (1.5 atm), among 0 to 2·10⁶ Pa (20 atm) in Fig. 3, enlarged along the abscissa.

In the figures, variation in the weight of methane adsorbed when water was adsorbed to active carbon beforehand is plotted with the mark "○" (blank circles), whereas the variation obtained when methane gas was adsorbed straight to the active carbon is plotted with the mark "●" (solid circles). As shown in Fig. 2, in the case where methane is fed after water is adsorbed beforehand, methane is rapidly stored henceforth even under a very low pressure. It is also indicated that in case of methane gas being fed after water was adsorbed straight to the active carbon, the amount of methane adsorbed per 1 g of the active carbon under 1.5·10⁵ Pa (1.5 atm) was about 1 mmol, whereas in case of methane gas being fed after adsorption of water to the active carbon, the amount of methane adsorbed under the same 1.5 atm was as much as 13 mmols.

**[Table 2]**

| Pressure, Pa (atm) | Amount of methane adsorbed per 1 g of active carbon (mmols) | | Ratio (A/B) |
|---|---|---|---|
| | Methane adsorbed to the active carbon after water was adsorbed (A) | Methane adsorbed straight to the active carbon (B) | |
| 2·10⁴ (0.2) | 11.77 | 0.18 | 65.4 |
| 1.5 · 10⁵ (1.5) | 13.08 | 0.88 | 14.9 |

Table 2 shows the results of comparison of the amounts of methane adsorbed per 1 g of the active carbon as shown in Fig. 2. As shown in Table 2, in comparing the amounts of methane adsorbed when an equilibrium of adsorption was reached, for example, under 2·10⁴ Pa (0.2 atm), an amount of methane adsorbed in the presence of water was 11.77 mmols as against the same of only 0.18 mmols when methane was adsorbed straight to the active carbon, representing a ratio of the former to the latter at 65. Further, in comparing amounts of methane adsorbed when an equilibrium of adsorption was reached under 1.5·10⁵ Pa (1.5 atm), an amount of methane adsorbed in the presence of water was 13.08 mmols as against the same of only 0.88 mmols when methane was adsorbed straight to the active carbon, representing the ratio at 15.

Fig. 3 shows the results of measurement obtained by contacting methane with the active carbon under pressure conditions higher than those of Fig. 2, wherein data under a pressure up to 1.5·10⁵ Pa (1.5 atm) as shown in Fig. 2 are plotted as well. As is evident from Fig. 3, when water is present, the amount of methane adsorbed gradually increased with an increase in the pressure of methane under 1.5·10⁵ Pa (1.5 atm) and higher, arriving at as much as 21 mmols per 1 g of the active carbon under 2·10⁶ Pa (20 atm).

In contrast, where methane was adsorbed straight to the active carbon, the amount of methane adsorbed increased only slightly with an increase in the pressure of methane, reaching as small as only around 5 mmols even under 2·10⁶ Pa (20 atm). Further, an amount of methane adsorbed pressurized only at 1·10⁶ Pa (1 atm) and adsorbed to the active carbon in coexistence of water was found to be as much as 12 mmols per 1 g of the active carbon, which is more than twice as much as the amount of methane adsorbed (about 5 mmols) under 2·10⁶ Pa (20 atm) when methane was adsorbed straight to the active carbon.

Then, volumes of methane adsorbed to 1 cc of the active carbon under different pressures according to Fig. 3, converted to respective volumes on the standard state basis, are equivalent to 191 cc under 7.1·10⁴ Pa (0.7 atm), 203 cc under 1.5 atm, 271 cc under 5·10⁵ Pa (5.0 atm), 290 cc under 1·10⁶ (10 atm), and 326 cc under 2·10⁶ Pa (20 atm). In this way, according to the invention, not only good adsorbing and storing action under reduced pressure or under such a low pressure as of normal pressures to 5·10⁵ Pa (5 atm) is attained, but also a more effective storage effect can be expected under pressures of 1·10⁶ Pa or 2·10⁶ Pa (10 atm or 20 atm) and higher.

The apparatus shown in Fig. 4 can be used fundamentally as a manufacturing apparatus of the solid fuel according to the invention. Fig. 5 is a view showing an embodiment of the manufacturing apparatus. Reference numeral 17 indicates a pipe for lower hydrocarbon fuel gas, which is connected to a gas storage tank, for example, of natural gas. Reference numeral 18 indicates a vapor generator of a substance serving as host, and 19 a reaction container. A porous material 20 is packed in the container 19 and is held with a meshwork or perforated plate. In the manufacture of the gas fuel-stored solid fuel, for example, a valve 21 is closed and valves 22, 23 are opened, under which the vapor is generated from the vapor generator 18 and fed into the container 19 via pipes 24, 25. Next, the valve 21 is opened to feed the lower hydrocarbon gas into the container 19. It will be noted that the vapor may be fed into the container 19 via a pipe other than the pipe 25. The vapor may also be generated by application of heat as well as under reduced pressure.

According to the procedure set out above, the lower hydrocarbon gas is rapidly adsorbed to the porous material. In the above procedure, the lower hydrocarbon gas is fed after the vapor has been fed to the porous material beforehand, and it is a matter of fact that the lower hydrocarbon gas may be fed simultaneously with the vapor. In this case, care should be taken in order not to cause any inconvenience such as of condensation of the vapor by controlling the flow rate, temperature and the like of the lower hydrocarbon gas or by appropriately designing the inner diameter of the pipe (25 in Fig. 5).

The solid fuel of the invention has a large amount of lower hydrocarbon fuel gas stored in the porous material whereby the solid fuel is compact in size (small in volume) and has strong heating power (great calorific value). Since the amount of gas to stored can be arbitrarily set, a desired degree of heating power (calorific value) can be imparted to the solid fuel. Further, the solid fuel is very advantageous from the standpoint of practical applications in that porous materials, which are inexpensively available, and water or alcohols are used, a large amount of fuel gas can be taken in the porous material in a short time under mild conditions of normal temperatures and normal pressures or close to these temperatures and pressures, and the solid fuel can be made without resorting to any specific types of pressure vessel and cooling device.

The features disclosed in the foregoing description, in the claims and/or in the accompanying drawings may, both separately and in any combination thereof, be material for realilsing the invention in diverse forms thereof.

## Claims

1. Use of a material obtained by contacting a lower hydrocarbon fuel gas with a porous material after adsorption of water, an alcohol, an organic acid or a quinone serving as a host to the fuel gas within the porous material or simultaneously with the adsorption of the host substance thereto, as a solid fuel.

2. Use of a material according to claim 1, wherein said porous material is active carbon.

3. Use of a material according to claim 1, wherein said lower hydrocarbon fuel gas adsorb to the porous material is a lower hydrocarbon selected from methane, ethane, ethylene, propane, butane and mixtures thereof.

4. Use of a material according to claim 1, wherein said lower hydrocarbon fuel gas adsorb to the porous material is natural gas or city gas.

5. A method for making a solid fuel, comprising the step of contacting a lower hydrocarbon-containing fuel gas with a porous material after adsorption of a quinone serving as a host to the fuel gas within the porous material or simultaneously with the adsorption of the host substance thereto.

6. A method according to claim 5, wherein said porous material is active carbon.

7. A method according to claim 5, wherein said lower hydrocarbon-containing fuel gas adsorbed to the porous material is a lower hydrocarbon selected from methane, ethane, ethylene, propane, butane and mixtures thereof.

8. A method according to claim 5, wherein said lower hydrocarbon-containing fuel gas adsorbed to the porous material is natural gas or city gas.

## Patentansprüche

1. Verwendung eines Materials, das durch Kontaktieren eines Brennstoffgases aus niederem Kohlenwasserstoff mit einem porösen Material nach Adsorption von Wasser, einem Alkohol, einer organischen Säure oder einem Chinon, was als ein Wirt für das Brennstoffgas innerhalb des porösen Materials dient, oder gleichzeitig mit der Adsorption der Wirtsubstanz darauf erhalten wird, als ein fester Brennstoff.

2. Verwendung eines Materials gemäß Anspruch 1, bei dem das poröse Material Aktivkohle ist.

3. Verwendung eines Materials gemäß Anspruch 1, bei dem das Brennstoffgas aus niederem Kohlenwasserstoff, das an das poröse Material adsorbiert ist, ein niederer Kohlenwasserstoff ist, der unter Methan, Ethan, Ethylen, Propan, Butan und Mischungen daraus ausgewählt ist.

4. Verwendung eines Materials nach Anspruch 1, bei dem das Brennstoffgas aus niederem Kohlenwasserstoff, das an das poröse Material adsorbiert ist, Erdgas oder Stadtgas ist.

5. Verfahren zur Herstellung eines festen Brennstoffes, das den Schritt des Kontaktierens eines einen niederen Kohlenwasserstoff enthaltenden Brennstoffgases mit einem porösen Material nach Adsorption eines Chinons, das als ein Wirt für das Brennstoffgas innerhalb des porösen Materials dient oder gleichzeitig mit der Adsorption der Wirtsubstanz darauf umfaßt.

6. Verfahren gemäß Anspruch 5, bei dem das poröse Material Aktivkohle ist.

7. Verfahren gemäß Anspruch 5, bei dem das den niederen Kohlenwasserstoff enthaltende Brennstoffgas, das auf das poröse Material adsorbiert ist, ein niederer Kohlenwasserstoff ist, der unter Methan, Ethan, Ethylen, Propan, Butan und Mischungen daraus ausgewählt ist.

8. Verfahren gemäß Anspruch 5, bei dem das den niederen Kohlenwasserstoff enthaltende Brennstoffgas, das auf das poröse Material adsorbiert ist, Erdgas oder Stadtgas ist.

## Revendications

1. Utilisation comme carburant solide d'un matériau obtenu en mettant en contact un gaz combustible d'hydrocarbure inférieur avec un matériau poreux après adsorption d'eau, d'un alcool, d'un acide organique ou d'une quinone servant d'hôte au gaz combustible à l'intérieur du matériau poreux ou simultanément avec l'adsorption de la substance hôte sur celui-ci.

2. Utilisation d'un matériau selon la revendication 1, dans lequel ledit matériau poreux est le charbon actif.

3. Utilisation d'un matériau selon la revendication 1, dans lequel ledit gaz combustible d'hydrocarbure inférieur adsorbé sur le matériau poreux est un hydrocarbure inférieur choisi parmi le méthane, l'éthane, l'éthylène, le propane, le butane et leurs mélanges.

4. Utilisation d'un matériau selon la revendication 1, dans lequel ledit gaz combustible d'hydrocarbure inférieur adsorbé sur le matériau poreux est du gaz naturel ou du gaz de ville.

5. Procédé de fabrication d'un combustible solide, comprenant les étapes consistant à mettre en contact un gaz combustible contenant un hydrocarbure inférieur avec un matériau poreux après adsorption d'une quinone servant d'hôte au gaz combustible à l'intérieur du matériau poreux ou simultanément avec l'adsorption de la substance hôte sur celui-ci.

6. Procédé selon la revendication 5, dans lequel ledit matériau poreux est le charbon actif.

7. Procédé selon la revendication 5, dans lequel ledit gaz combustible contenant un hydrocarbure inférieur adsorbé sur le matériau poreux est un hydrocarbure inférieur choisi parmi le méthane, l'éthane, l'éthylène, le propane, le butane et leurs mélanges.

8. Procédé selon la revendication 5, dans lequel ledit gaz combustible contenant un hydrocarbure inférieur adsorbé sur le matériau poreux est du gaz naturel ou du gaz de ville.
